(19) **Europäisches Patentamt European Patent Office Office européen des brevets**

(11) **EP 4 667 772 A1**

(12) **EUROPEAN PATENT APPLICATION**

(43) Date of publication:
**24.12.2025 Bulletin 2025/52**

(21) Application number: **24305991.2**

(22) Date of filing: **21.06.2024**

(51) International Patent Classification (IPC):
**F16F 7/10** (2006.01) **F03D 13/20** (2016.01)
**E04H 9/02** (2006.01) **F16F 7/116** (2006.01)

(52) Cooperative Patent Classification (CPC):
**F03D 13/201; E04H 9/0215; F16F 7/1022;**
F05B 2260/964; F16F 7/116; F16F 2230/0041;
F16F 2232/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **TotalEnergies OneTech**
  **92400 Courbevoie (FR)**
• **Ecole Centrale de Marseille**
  **13013 Marseille (FR)**
• **Centre National de la Recherche Scientifique**
  **75016 Paris (FR)**
• **Université d'Aix-Marseille**
  **13007 Marseille (FR)**

(72) Inventors:
• **CÔTE, Renaud**
  **13007 MARSEILLE (FR)**
• **MATTEI, Pierre-Olivier**
  **75016 PARIS (FR)**
• **GOURC, Etienne**
  **75016 PARIS (FR)**
• **CAPALDO, Mattéo**
  **92400 COURBEVOIE (FR)**
• **GENTIL, Frédéric**
  **92400 COURBEVOIE (FR)**

(74) Representative: **Plasseraud IP**
  **104 Rue de Richelieu**
  **CS92104**
  **75080 Paris Cedex 02 (FR)**

(54) **VIBRATION CONTROL DEVICE**

(57) Vibration control device (1) configured to dampen vibrations in an elongated structure, the vibration control device (1) comprising:
- a support structure (2) configured to be anchored to the elongated structure,
- a rotating frame (3) rotatably mounted on the support structure (2) around a first axis A1, and
- a linear spring dashpot (6) comprising a first end (61) that is pivotably attached to the support structure (2) around a second axis A2 and a second end (62) pivotably attached to the rotating frame (3) around a third axis A3, wherein the rotating frame (3) comprises a mass (M) distant from said first axis A1, said linear spring dashpot (6) is configured to exert a force to bring said mass to a rest position such that the mass oscillates around the rest position about the first axis A1 when the vibration control device is biased by a vibration.

FIG. 3

EP 4 667 772 A1

## Description

## Technical Field

The present disclosure relates to elongated structures in general, and to wind turbines in particular.

## Background Art

Elongated structures such as towers, wind turbines, cranes, poles, etc... comprise a slender and deformable body that are often subject to harsh environment involving strong winds and even waves and current for offshore structures. Under such conditions, the structure may vibrate under the excitation of the various environmental loads. The vibrations are transmitted to the foundation of the building thus increasing the overall ultimate loads and fatigue cycling.

To prevent environmental loads from becoming disruptive, the structures are typically dimensioned to verify several criteria; one of which being that the natural frequency of the structure may be at a sufficient distance from the frequency content of the environmental loads.

However, this criterion is very difficult to fulfill in the context of structures already featuring massive dimensions. In fact, it is often impossible to increase the size of already large structures due to the impact on mechanical constraints as well as due to the negative environmental impact of increased use of resources to build more robust structures.

It is therefore necessary to provide a solution to dampen vibrations in order to decrease the amplitude of movement of the vibration down to a level a reasonably-sized structure can withstand.

The use of linear resonator for the mitigation of resonant vibrations was disclosed in US989,958 and has been widely adopted ever since. These devices perform remarkably well when the dynamics properties of the system to be controlled are perfectly known, and the absorber is well tuned. However, these devices require heavy mass (about 10% of the mass of the system to be damped). Moreover, only a slight detuning highly degrades the performance in terms of vibration reduction. These devices are therefore not applicable to the mitigation of vibrations in floating wind turbines, as these are subject to varying loads.

To overcome these difficulties, the use of Nonlinear Energy Sinks (NES) constitutes a promising alternative. A NES is a small mass oscillator coupled to the host structure by means of a purely nonlinear stiffness. The lack of linear stiffness allows the NES to dissipate energy from the host structure within a large frequency band.

The application of NES for controlling vibrations in the particular case of floating wind turbines has for instance been studied in Zuo, H. and S. Zhu (2022). "Development of novel track nonlinear energy sinks for seismic performance improvement of offshore wind turbine towers". (Mechanical Systems and Signal Processing 172, p. 108975).

However, these solutions present drawbacks. For instance, the proposed mechanisms of the state of the art are often complex and behave rather poorly at very low frequencies, for example in the scale of the Hertz, typically below 10Hz.

The present disclosure aims at improving the prior art.

In particular, an aim of the present disclosure is to enable passive vibration control at very low frequencies. Another aim of the present disclosure is to propose a simple and cost-effective mechanism, that is able to rapidly decrease the movement amplitude of a structure due to vibrations. Another aim of the proposed solution is to enable a "plug and play" application to existing elongated structures.

## Summary

The present disclosure relates to a vibration control device configured to dampen vibrations in an elongated structure, the vibration control device comprising:

- a support structure configured to be anchored to the elongated structure,

- a rotating frame rotatably mounted on the support structure around a first axis,

- a linear spring dashpot comprising a first end that is pivotably attached to the support structure around a second axis and a second end pivotably attached to the rotating frame around a third axis,

wherein the rotating frame comprises a mass distant from said first axis, said linear spring dashpot is configured to exert a force to bring said mass to a rest position such that the mass oscillates around the rest position when the vibration control device is biased by a vibration.

A vibration control device according to the present disclosure thus behaves in a nonlinear manner, as the linear spring dashpot is biased transversally to its elongation direction. This way, it efficiently decreases the movement amplitude induced by vibrations of various frequencies. In fact, the non-linear behavior of the vibration control device allows greater tolerance in the tuning of the damper and make it suited for unpredictable or changing vibrations. Furthermore, it features considerably reduced friction between moving parts due to the use of rotational connections. This not only allows for an increased lifetime of the device but also enables the damping of very low frequency vibrations, for examples lower than 10Hz, compared to the prior art. That being said, the present solution is also suited for higher frequencies, for example higher than 10Hz. It also enables to dampen vibrations more rapidly than the prior art.

Furthermore, thanks to an ingenious architecture, the linear spring dashpot is easily accessible and may thus be effortlessly replaced if needed.

Furthermore, the vibration control device may also be biased by a rotational vibration. In fact, the vibrations of an elongated structure are mainly translational, but may as well be rotational in specific vibratory modes. This is the case for example when the middle of an elongated body is vibrating, thus resulting in a torque at the foundation but also in a rotational movement of the free end (further details below). Due to its mainly rotational mechanism, the vibration control device according to the present disclosure features the possibility of efficiently damping rotational vibrations as well.

The features set out in the following paragraphs can optionally be implemented, independently of one another or in combination with one another:

In examples, the mass, when in the rest position, is located opposite the second axis with respect to the first axis.

In examples, when in the rest position, the mass is located vertically above the first axis.

In examples, the first axis, second axis and third axis are distinct from one another.

In examples, the first axis, second axis and third axis are parallel to one another.

In examples, both the first end and the second end of the linear spring dashpot are adjustable in position respectively on the support structure and on the rotating frame, in order to set a position of the linear dashpot with respect to the first axis.

In examples, the support structure is shaped like a clevis comprising two support arms extending from a base, the first axis being located by free ends of both support arms.

In examples, the rotating frame is shaped like a clevis comprising two swinging arms extending from the mass, the rotating frame being mounted on the support structure around the first axis A1 by free ends of both swinging arms.

In examples, each support arm and each swinging arm comprising a groove extending along each support arm and each swinging arm, along which respectively first locking means of the first end and second locking means of the second end of the spring dashpot can slide to a chosen position and lock respective first end or second end at that chosen position.

The present disclosure further relates to a wind turbine comprising a first vibration control device of the type described above configured to dampen at least one vibration in the wind turbine, the support structure of said first vibration control device being fixed in such a way that its first axis is positioned substantially perpendicular to the movement induced by said at least one vibration.

In examples, said first vibration control device of the wind turbine is positioned vertically in such a way that its first axis is horizontal and that the rest position of the mass is located vertically above the first axis, said rest position thus being mechanically unstable due to the action of gravity.

In examples, the wind turbine comprises a second vibration control device according to any of claims 1 to 10, wherein the support frame of said second vibration control device is fixed in such a way that its first axis A1 is positioned substantially perpendicular to the first axis of the first vibration control device.

In examples, the first vibration control device is located vertically above the second vibration control device.

## Brief Description of Drawings

Other features, details and advantages will be shown in the following detailed description, only given as examples, and on the figures, on which:

Fig. 1 is an example of a wind turbine, to which in examples a vibration control device according to the present disclosure may be applied.

Fig. 2 shows on views A and B different vibratory modes in the context of a wind turbine.

Fig. 3 shows a perspective schematic view of a vibration control device according to an example.

Fig. 4 shows a side schematic view of a vibration control device according to an example.

Fig. 5 shows a front schematic view of a vibration control device according to an example.

Fig. 6 shows a schematic diagram of a vibration control device according to an example, introducing various parameters involved in mathematical formulas.

Fig. 7 shows a schematic diagram of a vibration control device according to a different example.

Fig. 8 shows two curves of experimental results demonstrating the efficiency of a vibration control device according to the present disclosure.

Fig. 9 shows on view A and B possible configuration examples of the application of several vibration control devices in an elongated structure.

## Description of Embodiments

The present disclosure relates to elongated structures in general, being subject to a plurality of excitation frequencies. Such elongated structures can be any building protruding in any direction from a base, which may be directly or indirectly mounted on the ground, floating on water, or anchored to water bottom, and comprising a free end. In particular, and as discussed in more details below, the elongated structure may be a wind turbine, which may be either onshore or offshore. Alternatively, the elongated structure may for example be a tower crane, or a power line pole, or any other tower-like building.

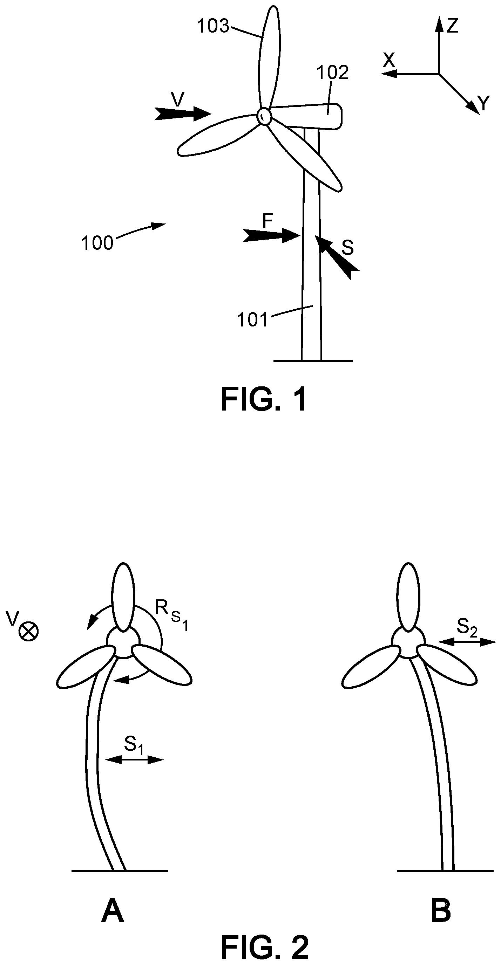

Figure 1 shows such an example of a wind turbine 100, comprising a mast 101, elongating vertically from a foundation that may either be anchored onshore or offshore. A nacelle 102 is fixed on top of the mast 101. The nacelle 102 is typically configured to accommodate a power system for converting the energy from the rotating blades 103 into electricity, for example a generator. The figure shows a X, Y, Z frame of reference, wherein the Z axis extends parallel to the elongation direction of the mast 101.

A wind turbine of this kind may easily exceed 100 meters in height. Such a tall structure is often subject to a plurality of excitation frequencies, resulting in movements of the mast and of the nacelle. The main vibrations are either fore-and-aft, along the direction of the wind which is parallel to the X Axis of the reference frame, or side-to-side along axis Y and perpendicular to the direction of the wind V. In the context of a wind turbine and concerning the fore-and-aft vibration, the rotating blades 103 of the turbine handle a major part of the wind action. Concerning side-to-side vibrations, it is possible to distinguish two different modes of vibrations of the wind turbine that can occur separately and/or simultaneously:

- a first mode, represented on view A of figure 2, resulting in a rotation RS1 of the nacelle induced by a transversal translation S1 of a middle region of the mast, this mode also inducing a torque by the foundation of the mast, and

- a second mode, represented on view B of figure 2, resulting in a transversal translation S2 of the nacelle, transversally to the direction of the wind.

The present disclosure proposes a vibration control device that may be used to dampen at least one of the presented directions of excitation and vibration modes.

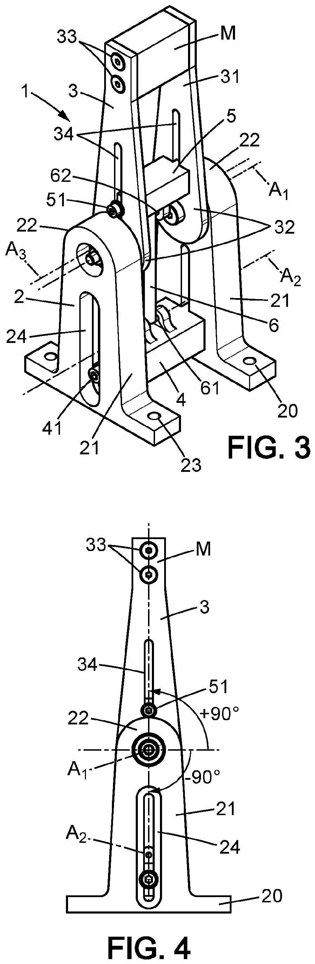

According to an example, a vibration control device 1 is represented in perspective on figure 3.

The vibration control device comprises a support structure 2 that is configured to be anchored to the elongated structure. In examples, the support structure 2 comprises a base 20 suited for fixation to the elongated structure. The base 20 may be provided with fixation means 23 configured to cooperate with the elongated structure.

In examples wherein the elongated structure is a wind turbine, the vibration control device may be anchored near the nacelle 102, typically inside the nacelle 102, or in a top region of the mast 101 by which the vibration is likely to be the strongest, depending on the particular vibratory mode to dampen.

The vibration control device 1 comprises a rotating frame 3 mounted on the support structure in such a way that it is able to rotate around a first axis A1 with respect to the support structure 2. The rotating frame 3 comprises a mass M that is configured to oscillate in rotation with the rotating frame 3.

In examples, the support structure 2 may comprise two aligned rotary bearings, for example ball or roller bearings, suited to form the first axis A1, and the rotating frame 3 may comprise two shafts configured to cooperate with the bearings to form a pivot connection. A reversed configuration is also possible.

The vibration control device 1 further comprises a linear spring dashpot 6, extending from a first end 61 pivotably mounted on the support structure 2 to a second end 62 pivotably mounted on the rotating frame 3.

Such a configuration allows the linear spring dashpot 6 to be biased at its second end 62 by the rocking movement of the rotating frame in a direction that is at least partly transversal to the elongation direction of the spring dashpot 6. Being biased this way, the linear spring dashpot, comprising solely linear components, exerts a non-linear returning action to the rotating frame.

The linear spring dashpot 6 is typically conceived in such a way that the second end 62 is movable in translation with respect to the first end 61, thus allowing a relative displacement of one end relative to the other. The elongation, or compression, of the spring dashpot compared to its free length generates an effort involving both the stiffness k and the viscous damping coefficient c of the linear spring dashpot.

In fact, the linear spring dashpot 6, comprises both a spring and a viscous damper, each featuring:

- a linear stiffness according to the formula $f = k.x$, wherein f is the force exerted by the spring in response to a longitudinal position x, the spring featuring a constant linear stiffness k, and

- a viscous damping according to the formula $f = c.dx/dt$, wherein f is the force exerted by the viscous damper in response to a longitudinal velocity corresponding to the first derivative of the position x with respect to time t, the viscous damper featuring a constant viscous damping coefficient c.

Both the stiffness and the viscous damping may be implemented in parallel.

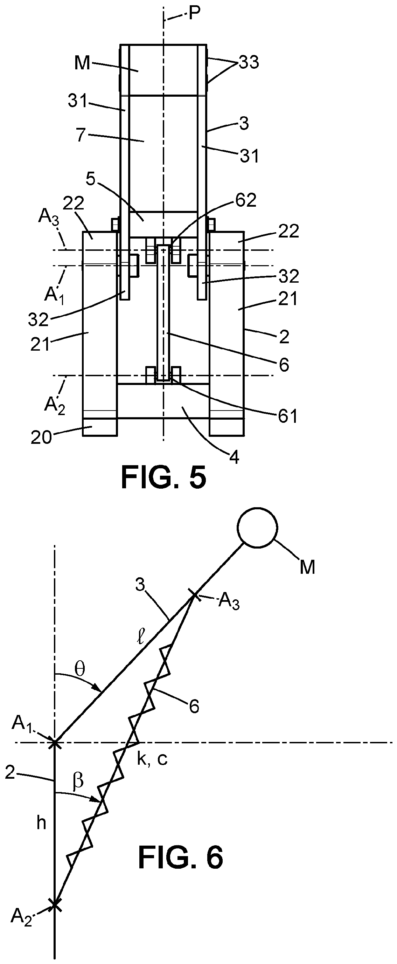

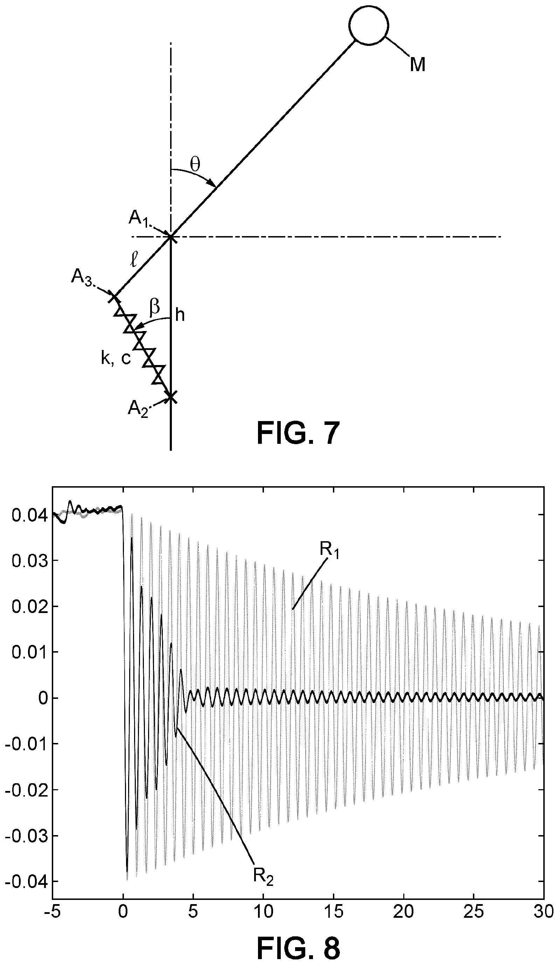

In examples, the spring may either be configured to work in compression or tension, depending on the use case and architecture of the mechanism. Two non-limiting possible variations are illustrated on figures 6 and 7.

The rotating frame 3 may comprise an elongated shape, extending between the first axis A1 and the mass M. In other words, the rotating frame 3 is conceived in such a way that it comprises two ends, one of them being rotatably mounted on the support structure 2, and the mass M being fixed to the other end that is thus free. In other examples, in a more general manner, the mass M is mounted on a free end of the rotating frame 3, at a distance from the first axis A1, said distance thus forming a lever arm.

In examples, the second end 62 of the linear spring dashpot 6 is connected to the rotating frame 3 in a zone located between the mass M and the first axis A1. Preferably the mass M, or more precisely its center of gravity, the third axis A3 of the second end 62 of the linear spring dashpot 6, and the first axis A1 are all aligned along the rotating frame 3.

In examples, the linear spring dashpot 6 may be directly pivotably secured by its first and second ends 61, 62 to respectively the support structure 2 and the rotating frame 3. Or, in other examples, the first and second ends 61, 62 may be secured to first and second intermediate supports 4, 5 that are anchored to respectively the support structure 2 and the rotating frame 3.

In general terms, any fixation method known to the state of the art is conceivable providing they allow a rotative degree of motion along a second and third axis A2, A3 for each of the first and the second ends 61, 62 of the linear spring dashpot 6. For example, deformable fixations are thus conceivable as an alternative to pivot connections.

The vibration control device thus comprises three main axis:

- a first axis A1, around which the rotating frame 3 rotates with respect to the support structure 2,

- a second axis A2 around which the linear spring dashpot 6 may rotate with respect to the support structure 2 by its first end 61, and

- a third axis A3 around which the linear spring dashpot 6 may rotate with respect to the rotating frame 3 by its second end 62.

In examples, the first axis A1, the second axis A2, and the third axis A3 are parallel to each other.

In examples, the first axis A1, the second axis A2, and the third axis A3 are distinct from each other.

The three main axis A1, A2, A3 described above are particularly visible in a non-limiting example shown in figure 5. In this example, the first, second and third axis A1, A2, A3 are parallel to each other and distinct from each other.

In examples, the mass M differs from the inherent mass of the rotating frame and is an additional mass that is of considerable value compared to the inherent mass of the rotating frame and is applied locally at a portion of the rotating frame, for example an end of the rotating frame. In examples, the mass M may be a cubic meter of metal. In examples, the inherent mass of the rotating frame 3 may be negligeable compared to the mass M, for example the mass M may weigh 5 times more, or 10 times more, or 100 times more than the rotating frame 3.

With reference to figure 4, showing a side view of the example of figure 3, the mass M has a rest position, induced by the action of the spring dashpot 6 in which it tends to maintain the mass M.

The rest position of the mass M is the angular position occupied by the mass M when the vibration control device is not biased by any vibratory solicitation, thanks to the action of the linear spring dashpot 6.

In examples, such as represented in the examples of figures 3, 4 and 5, the rest position of the mass M is located opposite to the support structure 2 with respect to the first axis A1. In other words, when considering a polar coordinate system around the first axis A1 as illustrated on figure 4, the second axis A2 is located at -90° whereas the mass is located, when in the rest position, at +90°.

In examples, when the mass M is in the rest position, the linear spring dashpot 6 extends from one side to the other of the first axis A1. In other words, in the rest position of the mass M, the first end 61 and the second end 62 of the linear spring dashpot 6 are separated by the first axis A1.

In examples, when in the rest position, the mass M, the first, second and third axis A1, A2 and A3 are all aligned, and the first axis A1 separates the zone in which the rotating frame 3 is located from the zone in which the support structure 2 is located.

When in use, the vibration control device may be oriented in such a way that the first axis A1 is perpendicular to the displacement induced by the vibration to control. This way, the vibration of the elongated structure is transferred to the support structure 2, to the first axis A1, forcing the mass M to oscillate with the rotating frame 3 around its rest position. The energy of the vibration is thus transferred to the movement of the mass which is dampened by the linear spring dashpot 6. The vibration control device is thus a passive dampening system, wherein the mass is solely forced out of its rest position by the vibration.

In examples, the vibration control device is used vertically. In this configuration, the rest position of the mass M being located at the top of the device, the action of gravity tends to make the mass "fall" to another downside balanced position, the action of gravity being counterbalanced by the action of the linear spring dashpot 6, tending to maintain the mass M at its top rest position. This way, the vibration control device uses the principle of an inverted pendulum, featuring an "unstable" top rest position. In this case, the first axis A1 thus extends in a horizontal plane.

In such examples, the rest position of the mass M being located on a top free end of the device on the rotating frame 3, the rotating frame 3 may thus be elongating vertically upwards from the first axis A1 to the mass M. The support structure 2 may thus be elongating vertically downward from the first axis A1 to the base 20, which may be fixed to the elongated structure.

In examples, the support structure 2 may features the "U" shape of a clevis. As illustrated on the non-limiting example of figure 3, the support structure 2 may comprise two support arms 21 extending from the base 20. In examples, the first axis A1 may be obtained by the alignment of two bearings each located by the free ends 22 of each support arm 21. Preferably, the first axis A1 may extend substantially perpendicular to the extension direction of both support arms 21.

In examples, the base 20 may be fixed to a wind turbine in such a way that the base extends in a horizontal plane and/or both support arms 21 extend vertically. In examples, the support arms 21 extend substantially parallel to the elongation direction of the elongated structure.

Still according to the example of figure 3, the rotating frame 3 may feature the shape of a clevis. Such a "U" shape may be obtained by two swinging arms 31 extending from the mass M, or from a support to which the mass M is secured. In the example of figure 3, the mass is directly secured to both swinging arms by fixation means 33, for example comprising screws.

In examples, the rotating frame 3 may be mounted on the support structure 2 by the free ends 32 of each swinging arm 31. The first axis A1 thus being located by the free ends 32 of the swinging arms 31.

In examples, as shown on figure 5, the rotating frame 3 and the support structure 2 may each feature shapes that are symmetrical with respect to a median plane P perpendicular to the first axis A1.

In examples, the clevis shapes of the rotating frame 3 and of the support structure 2 allow the vibration control device to feature an empty space 7 formed by the interstice between the two swinging arms 31 and the two support arms 21. In examples, the empty space 7 may be used to accommodate the linear spring dashpot. This allows for an increased compacity of the device and easy access to the spring dashpot 6 when needed for example for maintenance.

In examples, the second and third axes A2, A3 are adjustable in position with respect to the first axis A1. For example, the second and third axes A2, A3 may both be adjustable together in position on the support structure 2, allowing one of both axes to be moved closer and the other to be moved further away from the first axis A1, in such a way that the linear spring dashpot can be positioned with respect to the first axis A1. The second axis A2 and the third axis A3 can be positioned as a whole, without moving closer or further apart from each other.

In examples, the first end 61 of the linear spring dashpot 6, or a first intermediate support 4 to which it is fixed, may for example comprise first locking means 41 configured to cooperate with guiding means 24 of the support structure 2 along which the second axis A2, materialized by the first end 61, can slide to a chosen position and be locked at that chosen position. On the other hand, the second end 62 of the linear spring dashpot 6, or a second intermediate support 5 to which it is fixed, may for example comprise second locking means 51 configured to cooperate with guiding means 34 of the rotating frame 3 along which the third axis A3, materialized by the second end 62, can slide to a chosen position and be locked at that chosen position.

In examples, the first and second locking means 41, 51 are reversible.

In the non-limiting example of figure 3 and 4, both the second axis A2 and the third axis A3 are adjustable in position. In examples, the locking means 41, 51 comprise screws, and the guiding means 24, 34 comprise grooves along which the screws can slide. The reversible locking operation is performed by tightening the screw head which presses against the rotating frame 3. In examples, the intermediate supports 4 and 5, to which the first end 61 and the second end 62 are connected, are adjustable in position and comprise the locking means 41, 51.

In examples wherein the support structure 2 comprises two support arms 21, the guiding means 24 may comprise two grooves each provided along one support arm 21. In the same way, in examples wherein the rotating frame 3 comprises two swinging arms 31, the guiding means 34 may comprise two grooves, each being fitted along one swinging arm 31.

Adjusting the position of the second axis A2 and the third axis A3 together plays a role in setting the torque exerted by the linear spring dashpot on the rotating frame 3 about the first axis A1. In a particularly simple and efficient manner, the vibration control device according to the present disclosure offers an adjustable solution, adaptable to a variety of elongated structure dimensions and suited to dampen a plurality of vibration frequencies.

The inventors have demonstrated that the maximum stringback action of the linear dashpot is obtained when the distance between the first axis A1 and the third axis A3 is equal to the distance between the second axis A2 and the first axis A1. In other word, maximum returning action may be obtained when the linear spring dashpot is centered with respect to the first axis A1.

In examples, the guiding means may allow a displacement equal to the free length of the linear spring dashpot, for each first and/or second end 61, 62 of the linear spring dashpot 6.

In fact, figure 6 shows a schematic diagram of a vibration control device according to an example. The illustrated mechanism features a rotating frame 3 rotatably mounted by one end on a support structure 2 about a first axis A1. A mass M is fixed on the other end of the rotating frame 3. A linear spring dashpot 6 is pivotally mounted on both the support structure 2 and the rotating frame 3, about respectively a second axis A2 and a third axis A3. The mass M is represented, in this example, distant at an angle from the rest position. The angle of the oscillation is referenced $\theta$, the rest position corresponding to a position wherein $\theta = 0°$. The linear spring dashpot 6 also oscillates around the rest position by an angle $\beta$,

the rest position aso corresponding to an angle β = 0° of the linear spring dashpot. The linear spring dashpot 6 features a constant stiffness coefficient k and a constant viscous damping coefficient c according to the formulas described above. The three main axis A1, A2 and A3 are distinct in this example, and the second axis A2 is distant from the first axis A1 by a distance h. The third axis A3 is distant from the first axis A1 by a distance I.

When considering $l_0$ a free length of the linear spring dashpot, and when tuning the mechanism in such a way that $l_0 = h + l$, the torque exerted by the stiffness of the linear spring dashpot is calculated by the formula:

$$M = \frac{kl^2h^2}{2(h+l)^2}\theta^3$$

With the same condition, the torque exerted by the viscous damping of the spring dashpot is calculated by the formula:

$$M_v = \frac{cl^2h^2}{(h+l)^2}\theta^2\dot{\theta}$$

As clearly demonstrated by the formulas above, the vibration control device, although featuring a linear element, behaves in a non-linear manner thanks to the architecture its components. In fact, the rotating frame 3 and the location of the axis A1, A2, A3 allow the linear spring dashpot 6, in response to a vibration, to be biased in a transversal manner, thus oscillating around an angle β = 0° and thus exerting torques that follow non-linear formulas.

Figure 7 shows a possible variation of the architecture of the vibration control device according to an example of the present disclosure. The rotating frame 3 is here used as a rocker, rotatably mounted on the support structure 2 in a location distinct from its two ends. In an unchanged manner, the mass M is fixed to a free end of the rotating frame, opposite to the third axis A3 with respect to the first axis A1. The second axis A2 is, as before, fixed to the support structure 2. In the previous example of figure 6, the length of the linear spring dashpot 6 was superior to the distance h between axis A1 and A2. This results in having to use a compression spring for the linear spring dashpot 6. In this variation on figure 7, the distance h is greater than the length of the linear spring dashpot 6, which thus results in having to use a tension spring.

Thanks to research on the matter, the inventors have proven that such a non-linear response of the vibration control device efficiently dampens vibrations. In fact, figure 8 shows experimental measures of the displacement (in meters) of a small-scale model of a nacelle of a wind turbine on the ordinate versus time (in seconds) on the abscissa. The measures were taken in two distinct cases:

- the first curve R1 shows natural dampening of a vibration with time, without using the vibration control device according to the present disclosure, and

- the second curve R2 shows the dampening action of the vibration control device according to the present disclosure.

The first curve R1 clearly shows a very slow damping of the vibration, following an exponential-like decrease. On the other hand, the second curve R2 shows a very fast decrease of the movement amplitude with a quasi-linear gradient followed then by a slow damping or the residual movement.

As already mentioned, the vibration control device according to the present disclosure finds application in any elongated structures such as a construction crane, a power line pole or any tower-like building. The device finds particular use in wind turbines which may be subject to strong wind and/or waves and current depending on their location.

The vibration control device may typically be implemented where the vibration to control is the strongest in the elongated structure. In the case of a wind turbine, the vibration control device may be anchored to the nacelle, which corresponds to the free end of the mast. But it may also be implemented in any other part of the structure, for example in a middle region of the mast.

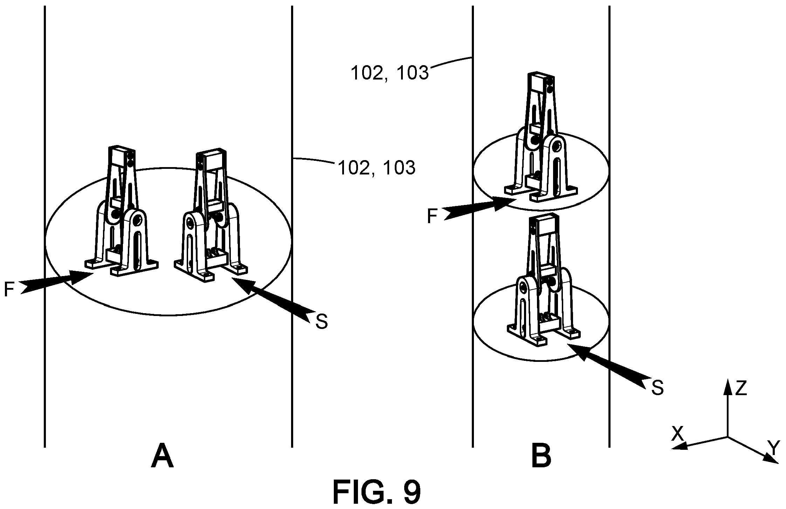

With reference to figure 1, 2 and 9, the main solicitations of a wind turbine are fore-and-aft F along the direction of the wind and side-to-side S perpendicular to the wind. In a wind turbine, the vibration control device may then be implemented in such a way that its first axis A1 is perpendicular to one of these solicitations. An example of such a configuration is represented on view A on figure 9.

Concerning vibrations according to the first mode illustrated on fig. 2, the movement to dampen is not a translation but a rotation RS1 of the nacelle 102. The vibration control system according to the present disclosure is suitable as well for damping such a rotational vibration. For this mode, the first axis A1 should be positioned parallel to the rotation axis of the vibration RS1. This way, the rotation RS1 of the nacelle induces a rotation of the support structure 2 which in turn, forces the mass M to oscillate around its rest position about the first axis A1.

In examples, there may be a plurality of vibration control devices in the elongated structure. For example, in the case of a wind turbine, there may be two vibration control devices, each being oriented in such a way that their first axis A1 are respectively perpendicular to each solicitations F and S.

A first vibration control device may for example be implemented on top of a second vibration control device, as illustrated as an example on view B of figure 9. In examples, they may be anchored aside each other, as illustrated as an example on view A of figure 9.

Thanks to its simplicity and to its easily adjustable parameters, such a vibration control device may as well be used in a "plug and play" manner in an elongated structure which is already in place.

**Claims**

1. Vibration control device (1) configured to dampen vibrations in an elongated structure, the vibration control device (1) comprising:

    - a support structure (2) configured to be anchored to the elongated structure,
    - a rotating frame (3) rotatably mounted on the support structure (2) around a first axis A1, and
    - a linear spring dashpot (6) comprising a first end (61) that is pivotably attached to the support structure (2) around a second axis A2 and a second end (62) pivotably attached to the rotating frame (3) around a third axis A3,

    wherein the rotating frame (3) comprises a mass (M) distant from said first axis A1, said linear spring dashpot (6) is configured to exert a force to bring said mass to a rest position such that the mass oscillates around the rest position about the first axis A1 when the vibration control device is biased by a vibration.

2. Vibration control device (1) according to the preceding claim, wherein the mass (M), when in the rest position, is located opposite the second axis A2 with respect to the first axis A1.

3. Vibration control device (1) according to any of the preceding claims, wherein, when in the rest position, the mass (M) is located vertically above the first axis A1.

4. Vibration control device (1) according to any of the preceding claims, wherein the first, second and third axis (A1, A2, A3) are distinct from one another.

5. Vibration control device (1) according to any of the preceding claims, wherein the first, second and third axis (A1, A2, A3) are parallel to one another.

6. Vibration control device (1) according to any of the preceding claims, wherein both the first end (61) and the second end (62) of the linear spring dashpot (6) are adjustable in position respectively on the support structure (2) and on the rotating frame (3), in order to set a position of the linear dashpot (6) with respect to the first axis A1.

7. Vibration control device (1) according to any of the preceding claims, wherein the support structure (2) is shaped like a clevis comprising two support arms (21) extending from a base (20), the first axis A1 being located by free ends (22) of both support arms (21).

8. Vibration control device (1) according to any of the preceding claims, wherein the rotating frame (3) is shaped like a clevis comprising two swinging arms (31) extending from the mass M, the rotating frame (3) being mounted on the support structure (2) around the first axis A1 by free ends (32) of both swinging arms (31).

9. Vibration control device (1) according to claims 7 and 8, each support arm (21) and each swinging arm (31) comprising a groove (24) extending along each support arm (21) and each swinging arm (31), along which respectively first locking means (41) of the first end (61) and second locking means (51) of the second end (62) of the spring dashpot can slide to a chosen position and lock respective first end (61) or second end (62) at that chosen position.

10. A Wind turbine comprising a first vibration control device (1) according to any of the preceding claims configured to dampen at least one vibration in the wind turbine, the support structure (2) of said first vibration control device (1) being fixed in such a way that its first axis A1 is positioned substantially perpendicular to the movement induced by said at least one vibration.

11. The Wind turbine according to the preceding claim, wherein said first vibration control device (1) is positioned vertically in such a way that its first axis A1 is horizontal and that the rest position of the mass is located vertically above the first axis A1, said rest position thus being mechanically unstable due to the action of gravity.

12. The Wind turbine according to any of claims 10 and 11 comprising a second vibration control device (1) according to any of claims 1 to 10, wherein the support frame (2) of said second vibration control device (1) is fixed in such a way that its first axis A1 is positioned substantially perpendicular to the first axis A1 of the first vibration control device (1).

13. The wind turbine according to the preceding claim wherein the first vibration control device (1) is located vertically above the second vibration control device (2).

**FIG. 1**

**FIG. 2**

**FIG. 3**

**FIG. 4**

FIG. 5

FIG. 6

**FIG. 7**

**FIG. 8**

FIG. 9

Europäisches
Patentamt

European
Patent Office

Office européen
des brevets

# EUROPEAN SEARCH REPORT

**Application Number**

EP 24 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 232393 A (MITSUBISHI HEAVY IND LTD) 22 August 2003 (2003-08-22) | 1,3-8, 10-13 | INV. F16F7/10 |
| A | * figures 1-7 * | 9 | F03D13/20 E04H9/02 |
| X | DE 39 35 925 A1 (MESSERSCHMITT BOELKOW BLOHM [DE]) 16 May 1991 (1991-05-16) | 1,2,4-6 | ADD. |
| A | * abstract; figure 1 * * column 1, line 48 - column 2, line 11 * | 9 | F16F7/116 |
| X | US 2023/193875 A1 (LI SHUANGHU [CN] ET AL) 22 June 2023 (2023-06-22) * abstract; figure 15 * * paragraphs [0063] and [0065] * * paragraph [0112] - paragraph [0113] * | 1 | |
| X | US 2022/228393 A1 (HANSEN SVEND OLE [DK]) 21 July 2022 (2022-07-21) * abstract; figures 4-6 * * paragraph [0057] - paragraph [0063] * | 1 | |
| A | JP S61 184139 U (.) 17 November 1986 (1986-11-17) * figures 1-5 * | 6 | TECHNICAL FIELDS SEARCHED (IPC) F16F F03D |
| A | US 2018/252287 A1 (MITSCH FRANZ [DE]) 6 September 2018 (2018-09-06) * abstract; figures 10A-12 * | 10-13 | E04H E04B |
| A | US 5 293 974 A (BIETENHADER CLAUDE [FR] ET AL) 15 March 1994 (1994-03-15) * abstract; figures 1-15 * * column 4, line 10 - column 5, line 2 * | 1 | |
| A | US 2020/182323 A1 (OTT MARK [US] ET AL) 11 June 2020 (2020-06-11) * abstract; figures 1-2C * | 1 | |

-/--

The present search report has been drawn up for all claims

| Place of search | Date of completion of the search | Examiner |
|---|---|---|
| The Hague | 25 November 2024 | Maroño Martínez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 390 115 A1 (UNIV AIX MARSEILLE [FR]; TOTALENERGIES ONETECH [FR] ET AL.) 26 June 2024 (2024-06-26) * abstract; figures 1-8 * ----- | 1 | |

TECHNICAL FIELDS SEARCHED (IPC)

The present search report has been drawn up for all claims

| Place of search | Date of completion of the search | Examiner |
|---|---|---|
| The Hague | 25 November 2024 | Maroño Martínez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | | Publication date | Patent family member(s) | | Publication date |
|---|---|---|---|---|---|
| JP 2003232393 | A | 22-08-2003 | NONE | | |
| DE 3935925 | A1 | 16-05-1991 | NONE | | |
| US 2023193875 | A1 | 22-06-2023 | AU | 2020450114 A1 | 08-12-2022 |
| | | | BR | 112022023894 A2 | 27-12-2022 |
| | | | CA | 3178315 A1 | 02-12-2021 |
| | | | CL | 2022003283 A1 | 03-02-2023 |
| | | | CN | 113738602 A | 03-12-2021 |
| | | | EP | 4130466 A1 | 08-02-2023 |
| | | | US | 2023193875 A1 | 22-06-2023 |
| | | | WO | 2021237979 A1 | 02-12-2021 |
| | | | ZA | 202212075 B | 31-01-2024 |
| US 2022228393 | A1 | 21-07-2022 | BR | 112021023508 A2 | 18-01-2022 |
| | | | CN | 113924400 A | 11-01-2022 |
| | | | DK | 201900632 A1 | 18-02-2021 |
| | | | EP | 3976906 A1 | 06-04-2022 |
| | | | SG | 11202112465T A | 30-12-2021 |
| | | | US | 2022228393 A1 | 21-07-2022 |
| | | | WO | 2020239590 A1 | 03-12-2020 |
| JP S61184139 | U | 17-11-1986 | NONE | | |
| US 2018252287 | A1 | 06-09-2018 | CN | 108350969 A | 31-07-2018 |
| | | | DK | 3341627 T3 | 06-01-2020 |
| | | | EP | 3341627 A1 | 04-07-2018 |
| | | | ES | 2763035 T3 | 26-05-2020 |
| | | | JP | 6965239 B2 | 10-11-2021 |
| | | | JP | 2018529901 A | 11-10-2018 |
| | | | KR | 20180044383 A | 02-05-2018 |
| | | | PT | 3341627 T | 11-12-2019 |
| | | | US | 2018252287 A1 | 06-09-2018 |
| | | | WO | 2017036581 A1 | 09-03-2017 |
| US 5293974 | A | 15-03-1994 | DE | 69200561 T2 | 09-03-1995 |
| | | | EP | 0506510 A1 | 30-09-1992 |
| | | | FR | 2674591 A1 | 02-10-1992 |
| | | | JP | 3257691 B2 | 18-02-2002 |
| | | | JP | H0585490 A | 06-04-1993 |
| | | | US | 5293974 A | 15-03-1994 |
| US 2020182323 | A1 | 11-06-2020 | CA | 3122367 A1 | 11-06-2020 |
| | | | CN | 113272573 A | 17-08-2021 |
| | | | EP | 3891412 A1 | 13-10-2021 |
| | | | JP | 2022511556 A | 31-01-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | | Publication date | Patent family member(s) | | Publication date |
|---|---|---|---|---|---|
| | | | KR | 20210089786 A | 16-07-2021 |
| | | | US | 2020182323 A1 | 11-06-2020 |
| | | | WO | 2020118129 A1 | 11-06-2020 |
| EP 4390115 | A1 | 26-06-2024 | EP | 4390115 A1 | 26-06-2024 |
| | | | WO | 2024132713 A1 | 27-06-2024 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 989958 A